Europäisches Patentamt

European Patent Office

Office européen des brevets

(11) Publication number: **0 117 848**
**B1**

# EUROPEAN PATENT SPECIFICATION

(45) Date of publication of patent specification: **08.04.87**

(51) Int. Cl.⁴: **A 01 G 3/08**

(21) Application number: **84810093.9**

(22) Date of filing: **27.02.84**

(54) **A portable power tool for cutting branches.**

(30) Priority: **28.02.83 JP 29725/83 u**

(43) Date of publication of application:
**05.09.84 Bulletin 84/36**

(45) Publication of the grant of the patent:
**08.04.87 Bulletin 87/15**

(84) Designated Contracting States:
**AT BE CH DE FR GB IT LI LU NL SE**

(56) References cited:
**US-A-1 550 342**
**US-A-2 677 888**
**US-A-2 921 370**
**US-A-2 921 370**

(73) Proprietor: **Yamada Machinery Industrial Co.,
Ltd.
5-1 Ashihara-dori
Hyogo-ku Kobe (JP)**

(72) Inventor: **Yamada, Sakuji
3-15 Kitanagasa-dori
Ikuta-ku Kobe (JP)**

(74) Representative: **Baggiolini, Raimondo et al
Racheli & Fiammenghi Via San Gottardo 15
CH-6900 Lugano (CH)**

Courier Press, Leamington Spa, England.

## Description

This invention relates to a portable power tool for cutting branches, and more particularly to such debranching tool with which an operator on the ground can cut lower branches from standing trees, without injuring the trunk surface of the tree and with a cut end face of a branch substantially flush with the body surface.

In the field of forestry, particularly afforestation and reforestation, periodical cleaning (debranching) of lower branches has proved effective and contributive to acceleration of growth of trees and also to production of commercially valuable lumber from which regularly grained wood for construction can be obtained. In particular, if a branch is cut off such that its base part remains projecting from the tree and therefore its cut end face is not flush with the trunk surface of the tree, irregular grains will be formed so as to cover the cut end face as the tree grows, with the result that the commercial value of the wood will be reduced. Thus, debranching is very important in the field of forestry. In fact, however, no convenient portable power device suitable for such specific debranching is available on the market. It is quite apparent that a large-sized, motorized vehicle type debranching apparatus as disclosed for example in US—A—4,269,241 is not applicable to cutting branches from closely spaced trees or trees standing on steeply inclined hillsides or the like that will not permit easy access thereto of the large-sized apparatus.

Portable power tools of the type disclosed for example in GB—A—1 339 691 and 2 027 324 appear somewhat similar to the portable power tool according to the present invention, in that the tool has a rotary cutting blade operatively mounted at one end of an elongated tubular member and driven by a light-weight engine connected to the other end of the tubular member. Further, it is true that this type of known portable power tool can be utilized, if desired, to cut branches from standing trees. However, each of such known power tools was designed primarily for the purpose of mowing grass or reaping sugar canes, jutes and the like plants. As a matter of course, such known power tool has no specific arrangements for cutting branches from standing trees without injuring the trunk surface of the tree and with a cut end face of a branch substantially flush with the trunk surface of the tree.

On the other hand, provision of a guard means for preventing damage to the trees during debranching operation has been proposed, for example, in US—A—2 921 370 and US—A—2 677 888, in which a first guard or guide member extends circumferentially along a part of the marginal edge of the cutting blade while a second guard or guide member has a part disposed adjacent to the edge of the cutting blade that is closest to the tubular member. However, with the specific construction disclosed in these prior art tools, it is difficult for an operator on the ground to cut lower branches from standing trees without injuring the trunk surface of the tree and with a cut end of a branch substantially flush with the trunk surface.

It is therefore, an object of the invention to provide an improved portable power tool with which an operator on the ground can cut lower branches from standing trees without injuring the trunk surface of the tree and with a cut end face of a branch substantially flush with the trunk surface.

Another object of the invention is to provide an improved portable power tool for cutting branches which is easy to manipulate without skill, simple in structure and permits manufacture at a low cost.

A further object of the invention is to provide an improved portable power tool for cutting branches which is provided with guide members having guide surfaces extending in a plane containing the trunk facing surface of the cutting blade.

Other objects features and advantages of the invention will become apparent from the detailed description given hereinafter in connection with the accompanying drawings.

According to the present invention, there is provided a portable power tool for cutting branches which comprises a rotary cutting blade operatively mounted at an upper end of an elongated rigid tubular member, the cutting blade being mounted on an output shaft that extends at a right angle or an obtuse angle to the longitudinal axis of the rigid tubular member, and a light-weight engine directly or indirectly connected to the lower end of said tubular member to drive said blade through power transmission means, a first guide member having a part extending circumferentially along that marginal edge of the cutting blade that is remote from the tubular member, and a second guide member having a part disposed adjacent to the edge of the cutting blade that is closest to the tubular member, characterized in that said first and second guide members have cooperating guide surfaces each extending substantially in a plane containing the trunk facing surface of said blade, and said second guide member also has a pair of side guide surfaces for resting against a branch to be cut and extending substantially rectilineally along their length.

The invention will now be described further, by way of example, with reference to the accompanying drawings, in which:

Figure 1 is a perspective view, in operation, of one example of a branch cutting tool to which the guide members featuring the invention are applied;

Figure 2 is a perspective view of another example of a branch cutting tool to which the guide members featuring the invention are applied;

Figure 3 is a top plan view showing a first embodiment according to the invention;

Figure 4 is a side elevation, partly in section and partly broken away for clarity, of the tool shown in Figure 3;

Figure 5 is a bottom plan view of the tool shown in Figures 3 and 4;

Figure 6 is a perspective view showing a second embodiment according to the invention;

Figure 7 is a perspective view showing a third embodiment according to the invention;

Figure 8 is a side elevation, with parts broken away, of the tool shown in Figure 7;

Figure 9 is a top plan view of the tool shown in Figures 7 and 8; and

Figures 10 to 12 are schematic top plan views for explanation of operation of the tool according to the invention.

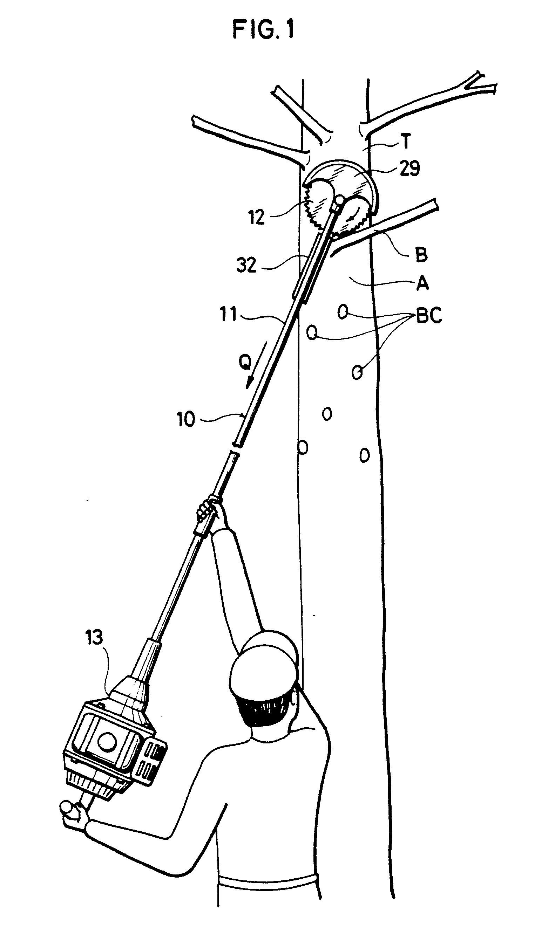

Referring now to the drawings wherein identical reference numerals and characters are used throughout the various views to indicate identical or substantially identical elements, a portable power tool 10 for cutting branches is illustrated in Figure 1 as having an elongated rigid tubular member 11 made of a metal tube or an appropriate synthetic resin tube reinforced by carbon fibers or the like, a rotary cutting blade 12, preferably a circular saw with tipped teeth, conventionally mounted at the upper end of the tubular member 11, and a known small-sized light-weight engine 13 conventionally mounted at the lower end of the tubular member 11. In Figure 1, reference character BC indicates cut end faces of the branches which have already been cut from the tree T.

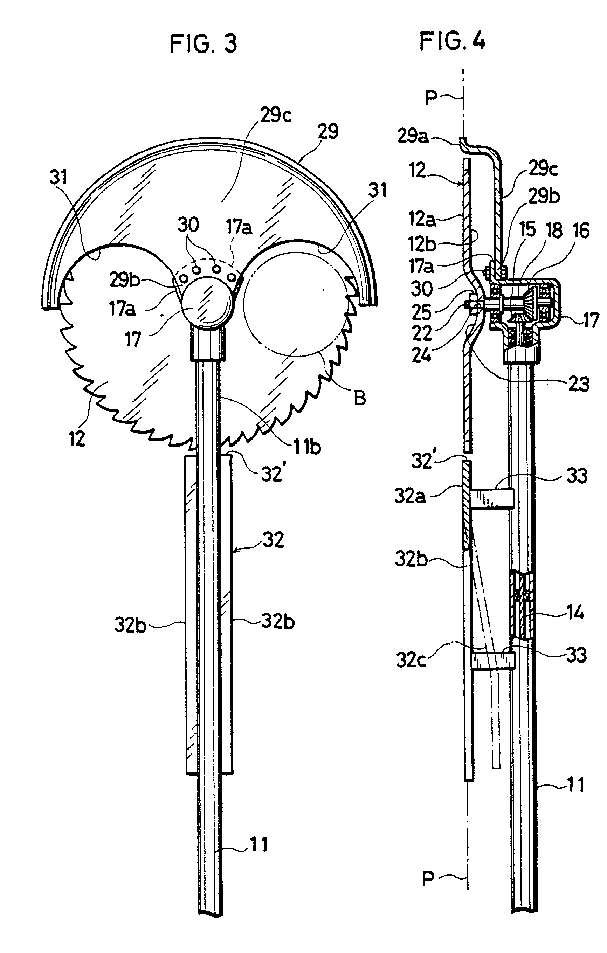

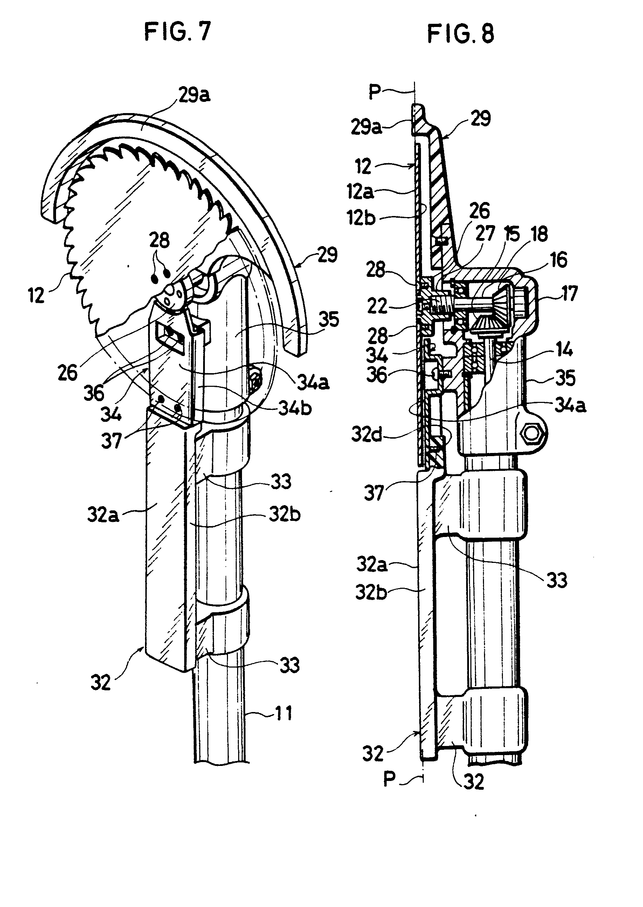

As best shown in Figures 4 and 8, the power from the engine 13 is transmitted to the cutting blade 12 by means of a known internal drive shaft 14 which passes through the tubular member 11, transmission bevel gears 15, 16 which are conventionally arranged within a gear casing 17 mounted at the upper end of the tubular member 11, and a driven shaft or output shaft 18 whose free end 22 extends out of the gear casing 17 to support the blade 12. In the illustrated embodiments, the output shaft 18 extends at a right angle to the drive shaft 14. If desired, however, the output shaft 18 may be arranged so as to extend at an obtuse angle ranging from 90° to 120° to the drive shaft 14, so that the longitudinal axis of the tubular member 11 extends at an angle of less than 30° with respect to a plane P containing the trunk facing surface 12a of the cutting blade 12.

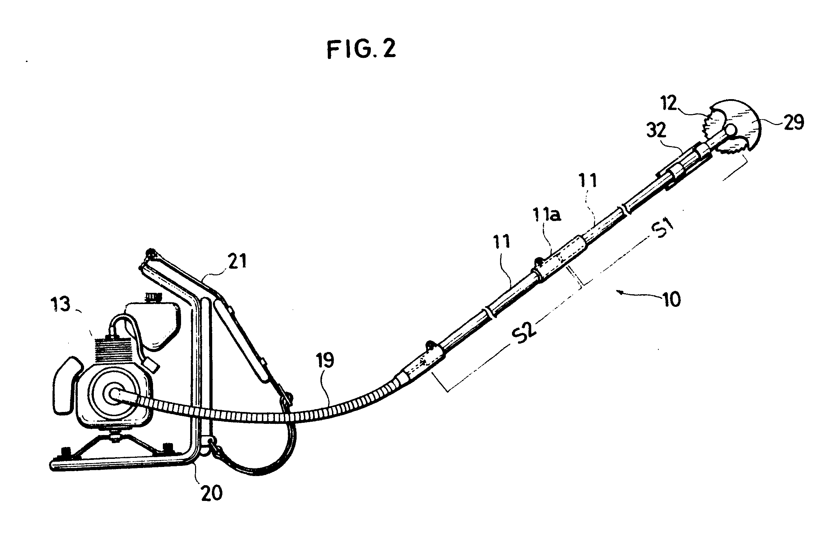

As illustrated in Figure 2, a flexible tubular member 19, having a known internal flexible drive shaft (not shown) passing therethrough to operatively connect the aforesaid drive shaft 14 and the engine 13, may be interposed between the rigid tubular member 11 and the engine 13 which is placed on a supporting frame 20, so that the engine 13 can be carried on an operator's back with the aid of shoulder straps 21, thereby to reduce the machine weight loaded on the operator's arms.

Also as illustrated in Figure 2, the rigid tubular member 11 and the internal drive shaft 14 may be composed of two or more sections S1, S2 detachably connectable to one another by means of a known connecting socket 11a, so that the member 11 and its internal drive shaft 14 can be adjusted in axial length if desired.

The outer end 22 of the driven shaft 18 should not project beyond the plane P, in order that said outer end 22 will not injure the trunk surface A of a tree T during the branch cutting operation. In order to meet this requirement, various means can be employed. For instance, as illustrated in Figure 4, the cutting blade 12 may be formed with a central dent 23 surrounding a center hole 24 through which the threaded outer end 22 of the output shaft 18 projects for engagement with a clamp nut 25 by means of which the blade 12 fixedly clamped to the output shaft 18. The depth of the dent 23 should be so predetermined that neither said outer end 22 nor the clamp nut 25 project beyond the plane P. Alternatively, as illustrated in Figure 8, a mounting block 26 having an internally threaded nut portion 27 integrally formed therewith may be fixedly mounted on the inner surface 12b of the blade 12 by means of a plurality of clamp screws 28. Thus, the blade 12 can be mounted to the output shaft 18 by engagement of the threaded extension 22 of the shaft 18 with the nut portion 27, with the result that the terminal end of the shaft 18 does not project beyond the plane P.

A first guide member 29 having a front guide surface 29a, preferably semi-circular, may be provided so as to lie in the plane P and extend circumferentially along that half of the circular marginal edge of the blade 12 that is remote from the tubular member 11. In the embodiment illustrated in Figures 3 and 4, such first guide member 29 is made of metal sheet and is secured at its base portion 29b to a flange 17a of the gear casing 17 by means of bolts 30 and nuts.

In instances where the first guide member 29 has a flat portion 29c extending in parallel relation with respect to the plane P and spaced form the rear surface (12b) of the blade as illustrated in Figures 3 and 4, and pair of substantially semi-circular recesses 31 may be formed in said portion 29c so as to be positioned, one on both sides of the gear casing 17, in order that a part of a branch B to be cut can be received in the recess 31, resulting in that the tool can be utilized to cut such a branch (shown in phantom line in Figure 3) when it is relatively large in diameter. However, if desired, both or any one of the recesses 31 may be omitted.

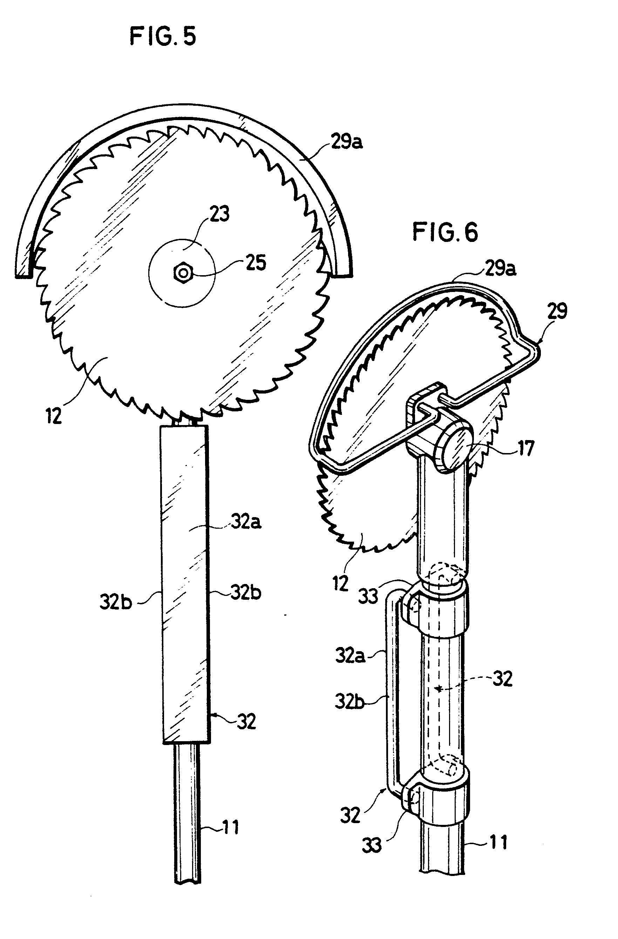

As illustrated in Figure 6, the first guide member 29 may be formed of a metal bar or tube by bending it to proved that afore-described front guide surface 29a. It is obvious that the guide member 29 may be formed of synthetic resin and shaped as illustrated in Figures 7 to 9. It is also obvious that the structure and configuration of the first guide member 29 should not be limited to those specific examples as illustrated but may be modified in various ways as may fall within the scope of the appended claims. In the illustrated embodiments, the front guide surface 29a is arranged so as to cover substantially that half of the circular marginal edge of the blade 12 that is remote from the tubular member 11, but such surface 29a may extend shorter or longer than those illustrated.

A second guide member 32, having one end 32' that is preferably disposed close to the blade 12, is fixedly mounted on the rigid tubular member 11 by means of known connecting members 33. The second guide member 32 may preferably be in the form of a rectangular plate made of metal (Fig. 4) or synthetic resin (Fig. 8) or otherwise it may be in the form of one or more bars or tubes (Fig. 6), as long as it has a guide surface 32a extending along its length in the plane P and a pair of side guide surfaces 32b each extending substantially parallel with the tubular member 11. Incidentally, it is not always necessary that the whole of this guide surface 32a lies in the plane P. In other words, at least a part of the guide surface 32a should lie in the plane P but the remainder part 32c may be disposed off the plane P as shown in phantom lines in Figure 4.

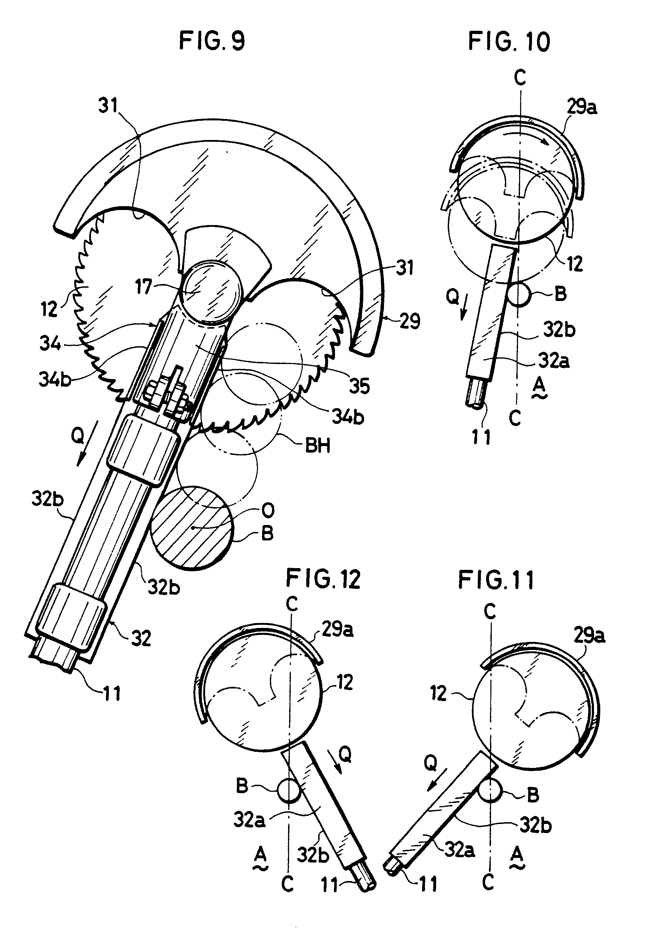

If desired, a third guide member 34 may be interposed between the gear casing 17 and the second guide member 32, as illustrated in Figures 7 to 9. The third guide member 34 has a surface 34a disposed very close to the inner surface 12b of the blade 12 and extending in parallel relationship with the surface 12b. The member 34 further has a pair of side guide surfaces 34b of the second guide member 32 as best shown in Figure 9. In the illustrated example, such third guide member 34 is fixedly mounted to a bracket 35 by means of screws 36 and also to a front extension 32b of the second guide member 32 by means of screws 37. It is apparent, however, that the construction and the way to mount the member 34 to the tool body may be varied in various ways and that such member 34 may be formed of synthetic resin or made of metal sheet, so that it can not only prevent undesirable deformation and/or excessive vibrations in the blade 12 or its dislocation from the plane P which may occur during cutting operation under heavy load but also facilitates a smooth cutting performance because a branch B, when being cut (See Reference BH in Figure 9), comes into contact with one of the side surface 34b of the member 34 and thus the tool can be prevented from unstable movement. This can be done quite smoothly in cases where the guide surface 34b lies in the extension of the side surface 32b of the second guide member 32 and therefore the path of the center O of the branch B relatively to the cutting tool is a straight line as will be clear from Figure 9. If such a third guide member 34 is not provided, the half-cut branch BH (Fig. 9) will suddenly collide at its one side against a side 11b (Fig. 3) of the tubular member 11 during the cutting performance.

In operation, as a first step, an operator directs the elongated rigid tubular member 11 upwardly so that the cutting blade 12 is positioned above a branch B to be cut off and so that the branch B is in contact at its one side with one of the side guide surfaces 32b of the guide member 32 (Fig. 9). Then, both the first and the second guide members 29, 32 are pressed against the surface A of the tree trunk, with the tubular member 11 somewhat inclined, preferably in such a manner that at least one part of the front guide surface 29a of the first guide member 29 and also at least one part of the guide surface 32a of the second guide member 32 are positioned on or near a generating line C—C of the substantially cylindrical trunk of the tree that passes through substantially the center of the branch B.

Thus, the trunk facing surface 12a of the cutting blade 12 is positioned so as to be extremely close to and parallel with the trunk surface A of the tree (Fig. 11). At this stage, the weight of the inclined tool can be partially supported by the branch B, and therefore, the load applied on the operator's arms can be reduced.

As the tubular member 11 is pulled downwardly in the direction of the arrow Q, while keeping the side guide surface 32b sliding on the side of the branch B, the branch B can be cut off in the manner as illustrated in Figure 9. Provided that the cutting blade 12 is correctly slid downwardly, the cut end faces BC are substantially flush with the trunk surface A of the tree T, as illustrated in Figure 1.

The cutting operation can be performed even when the elongated tubular member 11 is inclined relatively to the tree as illustrated in Figure 12. In other words, the branch B may be cut from either side thereof, and therefore the operator can cut a plurality of accessible branches from the same spot, which is very advantageous and contributive to efficiency.

As will be apparent from the foregoing description and illustration, the first and the second guide members cooperate to properly position the cutting blade 12 with respect to a branch to be cut and also to the trunk of the tree, so that the cutting operation can be performed quite easily and efficiently without injuring a trunk surface of the tree and with the cut end face of a branch substantially flush with the trunk surface.

**Claims**

1. A portable power tool for cutting branches, comprising a rotary cutting blade (12) operatively mounted at an upper end of an elongated rigid tubular member (11), the cutting blade being mounted on an output shaft (18) that extends at a right angle or an obtuse angle to the longitudinal axis of the rigid tubular member (11), and a lightweight engine (13) directly or indirectly connected to the lower end of said tubular member (11) to drive said blade (12) through power transmission means (14, 15, 16, 18), a first guide member (29) having a part extending circumferentially along that marginal edge of the cutting blade (12) that is remote from the tubular member (11), and a second guide member (32) having a part disposed adjacent to the edge of the cutting blade (12) that is closest to the tubular member (11), characterized in that said first and second guide members have cooperating guide surfaces (29a), (32a) each extending substantially in a plane (P) containing the trunk facing surface (12a) of said blade (12), and said second guide member also has a pair of side guide surfaces (32b) for resting against a branch to be cut and extending substantially rectilineally along their length.

2. The tool according to Claim 1, characterized in that said first guide member (29) is fixedly supported by a gear casing (17) mounted at said upper end of said tubular member (11) and said second guide member (32) is fixedly supported by said tubular member.

3. The tool according to Claims 1 or 2, characterized in that said first guide member (29) has a flat cover portion (29c) extending in parallel relation with respect to said plane (P) and spaced from the rear surface (12b) of said blade.

4. The tool according to Claim 3, characterized in that at least one substantially semi-circular recess (31) is formed in said portion (29c) such that a branch being cut can extend into said recess.

5. The tool according to Claims 1 or 2, characterized in that said first guide member (29) is formed of a bar or a tube.

6. The tool according to Claims 1 or 2, characterized in that said second guide member (32) is in the form of a rectangular plate.

7. The tool according to Claims 1 or 2, characterized in that said second guide member (32) is formed of a bar or a tube.

8. The tool according to any one of the preceding Claims, characterized in that a third guide member (34) is interposed between said first and said second guide members (29, 32) and said third guide member (34) has a surface (34a) disposed very close to the rear surface (12b) of said cutting blade (12) and extending in parallel relation with said surface (12).

9. The tool according to Claim 8, characterized in that said third guide member (34) has a pair of side guide surfaces (34b) lying in extensions of said side guide surfaces (32b) of the second guide member (32).

10. The tool according to Claim 1, characterized in that said cutting blade (12) has a central dent (23) formed therewith for receiving a clamp nut (25) therein.

11. The tool according to Claim 1, characterized in that a mounting block (26) is fixedly mounted on the rear surface (12b) of said cutting blade (12) and the output shaft (18) of the tool is connected to said mounting block.

**Patentansprüche**

1. Tragfähiges Motorwerkzeug zum Schneiden von Ästen, mit einem drehfähigen Schneidblatt (12), das am oberen Ende eines länglichen steifen rohrfömigen Gliedes (11) betriebsfähig angeordnet ist, bei dem das Schneidblatt an einer Ausgangswelle (18) befestigt ist, die sich unter einem rechten Winkel oder einem stumpfen Winkel zur Längsachse des steifen rohrfömigen Gliedes (11) erstreckt, und mit einem Motor (13) leichten Gewichts, der direkt oder indirekt mit dem unteren Ende des rohrförmigen Gliedes (11) verbunden ist, um das Schneidblatt (12) über eine leistungsübertragende Einrichtung (14, 15, 16, 18) anzutreiben, mit einem ersten Führungsglied (29), von dem ein Teil sich in Umgangsrichtung entland derjenigen Kante des Schneidblattes (12) erstreckt, die vom rohrförmigen Glied (11) entfernt liegt,

und mit einem zweiten Führungsglied (32), von dem ein Teil neben derjenigen Kante des Schneidblattes (12) angeordnet ist, die zum rohrförmigen Glied (11) am nächsten liegt, dadurch gekennzeichnet, daß das erste und zweite Führungsglied zusammenwirkende Führungsflächen (29a), (32a) aufweisen, von denen sich jede im wesentlichen in einer Ebene (P) erstreckt, welche die dem Stamm zugewandte Fläche (12a) des Schneidblattes (12) enthält, und

daß das zweite Führungsglied auch ein Paar von Seitenführungsflächen (32b) zum Ansetzen gegen einen abzuschneidenden Ast aufweist, die sich im wesentlichen geradlinig über ihre Länge erstrecken.

2. Werkzeug nach Anspruch 1, dadurch gekennzeichnet, daß das erste Führungsglied (29) durch einen Gehäusekasten (17) fest gelagert ist, welcher am oberen Ende des rohrförmigen Gliedes (11) angeordnet ist, und daß das zweite Führungsglied (32) vom rohrförmigen Glied fest gehaltert wird.

3. Werkzeug nach Anspruch 1 oder 2, dadurch gekennzeichnet, daß das erste Führungsglied (29) einen flachen Abdeckabschnitt (29c) aufweist, der sich in paralleler Beziehung zur Ebene (P) erstreckt und von der rückwärtigen Fläche (12b) des Schneidblattes beabstandet ist.

4. Werkzeug nach Anspruch 3, dadurch gekennzeichnet, daß wenigstens eine im wesentlichen halbkreisförmige Aussparung (31) in dem Abschnitt (29c) ausgebildet ist, so daß ein abzuschneidender Ast sich in diese Aussparung erstrecken kann.

5. Werkzeug nach Anspruch 1 oder 2, dadurch gekennzeichnet, daß das erste Führungsglied (29) aus einer Stange oder einem Rohr geformt ist.

6. Werkzeug nach Anspruch 1 oder 2, dadurch gekennzeichnet, daß das zweite Führungsglied (32) in Form einer rechtwinkligen Platte vorgesehen ist.

7. Werkzeug nach Anspruch 1 oder 2, dadurch gekennzeichnet, daß das zweite Führungsglied (32) aus einer Stange oder einem Rohr geformt ist.

8. Werkzeug nach wenigstens einem der vorangehenden Ansprüche, dadurch gekennzeichnet, daß ein drittes Führungsglied (34) zwischen das erste und das zweite Führungsglied (29, 32) eingesetzt ist und daß das dritte Führungsglied (34) eine Oberfläche (34a) aufweist, die sehr nahe zur rückwärtigen Fläche (12b) des Schneidblattes (12) angeordnet ist und in paralleler Beziehung zu dieser Fläche (12b) verläuft.

9. Werkzeug nach Anspruch 8, dadurch gekennzeichnet, daß das dritte Führungsglied (34) ein Paar von Seitenführungsflächen (34b) aufweist, die in den Verlängerungen der Seitenführungsflächen (32b) des zweiten Führungsgliedes (32) liegen.

10. Werkzeug nach Anspruch 1, dadurch gekennzeichnet, daß das Schneidblatt (12) eine mittige Vertiefung (23) aufweist, die zur einer Haltemutter (25) geformt ist.

11. Werkzeug nach Anspruch 1, dadurch gekennzeichnet, daß ein Befestigungsblock (26) fest auf der rückseitigen Fläche (12b) des Schneidblattes (12) angeordnet ist und daß die Ausgangswelle (18) des Werkzeuges mit dem Befestigungsblock verbunden ist.

**Revendications**

1. Outil motorisé portable pour l'élagage des branches, qui comprend une lame de coupe rotative (12) montée opérativement sur l'extrémité supérieure d'un élément tubulaire rigide allongé (11) la lame de coupe étant montée sur un arbre de sortie (18) qui s'étend perpendiculairement ou selon un angle obtus par rapport à l'axe longitudinal de l'élément tubulaire rigide (11), et un moteur léger (13) relié directement ou indirectement à l'extrémité inférieure de l'élément tubulaire (11) pour entraîner ladite lame (12) par l'intermédiaire de moyens de transmission (14, 15, 16, 17), un premier élément de guidage (29) ayant une partie qui s'étend circonférentiellement le long du bord marginal de la lame de coupe (12) le plus éloigné de l'élément tubulaire (11), et un deuxième élément de guidage (32) ayant une partie disposée de façon adjacente au bord de la lame de coupe (12) qui est le plus proche de l'élément tubulaire (11), ledit outil étant caractérisé en ce que le premier et le deuxième élément de guidage ont des surfaces de guidage coopérantes (29a, 32a) qui s'étendent chacune sensiblement dans un plan (P) contenant la surface de la lame orientée vers le tronc (12a), et en ce que le deuxième élément de guidage comporte également deux surfaces latérales de guidage (32b) destinées à reposer contre la branche à couper et s'étendant de façon sensiblement rectiligne sur toute leur longueur.

2. Outil suivant la revendication 1, caractérisé en ce que le premier élément de guidage (29) est supporté rigidement par une boîte de transmission (17) montée à l'extrémité supérieure de l'élément tubulaire (11) et en ce que le deuxième élément de guidage (32) est supporté rigidement par l'élément tubulaire.

3. Outil suivant les revendications 1 ou 2, caractérisé en ce que le premier élément de guidage comporte une portion formant couvercle plat (29c) qui s'étend parallèlement au plan (P) précité et est espacée de la surface arrière (12b) de la lame.

4. Outil suivant la revendication 3, caractérisé en ce qu'au moins un évidement sensiblement semi-circulaire (31) est formé dans la portion précitée (29c) de façon qu'une branche en cours d'élagage puisse se loger dans l'évidement.

5. Outil suivant les revendications 1 ou 2, caractérisé en ce que le premier élément de guidage (29) est constitué par une barre ou un tube.

6. Outil suivant les revendications 1 ou 2, caractérisé en ce que le deuxième élément de guidage (32) est constitué par une plaque rectangulaire.

7. Outil suivant les revendications 1 ou 2, caractérisé en ce que le deuxième élément de guidage (32) est constitué par une barre ou un tube.

8. Outil suivant l'une quelconque des revendications précédentes, caractérisé en ce qu'un troisième élément de guidage (34) est interposé entre les premier et deuxième éléments de guidage (29, 32) ledit troisième élément de guidage ayant une surface (34a) disposée à proximité immédiate de la surface arrière (12b) de la lame de coupe (12) et s'étendant parallèlement à ladite surface (12b).

9. Outil suivant la revendication 8, caractérisé en ce que le troisième élément de guidage (34) comporte deux surfaces latérales de guidage (34b) s'étendant dans le prolongement des surfaces latérales de guidage (32b) du deuxième élément de guidage (32).

10. Outil suivant la revendication 1, caractérisé en ce que la lame de coupe (12) présente un creux central (23) destiné au logement d'un écrou de serrage (25).

11. Outil suivant la revendication 1, caractérisé en ce qu'un bloc de montage (26) est monté rigidement sur la surface arrière (12b) de la lame de coupe (12) et en ce que l'arbre de sortie (18) de l'outil est relié audit bloc de montage.

# FIG. 1

# FIG. 2

FIG. 3

FIG. 4

# FIG. 5

# FIG. 6

## FIG. 7

## FIG. 8

FIG.9

FIG.10

FIG.12

FIG.11